# FASCICULE DE BREVET EUROPEEN

(11) **EP 4 189 812 B1**
(45) Date de publication et mention de la délivrance du brevet: **12.06.2024**
(21) Numéro de dépôt: 21742846.5
(22) Date de dépôt: 20.07.2021
(51) Int. Cl.: H02K 1/2795, H02K 15/03, H02K 21/24

(54) **PROCÉDÉ D'ASSEMBLAGE D'UN ÉLÉMENT À PÔLE MAGNÉTIQUE POUR UN ROTOR POUR MACHINE ÉLECTRIQUE À FLUX AXIAL**
VERFAHREN ZUR MONTAGE EINES MAGNETPOLELEMENTS FÜR EINEN ROTOR FÜR EINE ELEKTRISCHE AXIALFLUSSMASCHINE
METHOD FOR ASSEMBLING A MAGNETIC POLE ELEMENT FOR A ROTOR FOR AN AXIAL FLOW ELECTRIC MACHINE

(30) Priorité: 29.07.2020 FR 2007988
(43) Date de publication de la demande: 07.06.2023
(73) Titulaire: Ampere SAS, 92100 Boulogne-Billancourt (FR); Whylot, 46100 Cambes (FR)
(72) Inventeur: KOLEHMAINEN, Jere, 76410 Saint-Aubin-lès-Elbeuf (FR); MAYEUR, Loic, 12300 St Santin (FR)
(74) Mandataire: Jacobacci Coralis Harle
(86) Numéro de dépôt international: PCT/EP2021/070301
(87) Numéro de publication internationale: WO 2022/023128

(56) Documents cités:
- EP-A2- 2 306 619
- JP-A- S57 107 010
- US-A- 3 979 619

## Description

### DOMAINE TECHNIQUE DE L'INVENTION

La présente invention concerne de manière générale le domaine des machines électriques.

Elle concerne plus particulièrement l'assemblage d'un élément à pôle magnétique pour un rotor pour machine électrique à flux axial.

L'invention trouve une application particulièrement avantageuse dans les moteurs électriques pour véhicules automobile électriques ou hydrides.

### ETAT DE LA TECHNIQUE

Une machine électrique à flux axial comprend généralement deux stators et un rotor, des entrefers séparant ces deux types d'éléments. Le rotor porte une série d'aimants permanents, tandis qu'une série de bobines est portée par les stators. Quand les bobines sont alimentées par un courant électrique, le rotor, qui est solidarisé à l'arbre de sortie du moteur, est soumis à un couple résultant du champ magnétique (le flux magnétique créé étant un flux axial pour une machine électrique à flux axial).

Pour réduire les pertes énergétiques par courants de Foucault dans le rotor, et ainsi augmenter les performances de la machine électrique, les aimants permanents peuvent comprendre une pluralité d'aimants unitaires de taille réduite. En effet, un aimant est sujet à des pertes par courants de Foucault plus importantes que son équivalent en petits aimants unitaires. Les aimants unitaires sont agencés de façon serrée pour maximiser le volume de matériau magnétique par rapport au volume de l'élément à pôle magnétique correspondant et ainsi améliorer les performances de la machine électrique.

On connait par exemple des documents WO2018172636 et EP2306619 une structure comprenant des aimants unitaires en forme de polyèdre. Ces aimants unitaires présentent l'avantage de pouvoir former un réseau serré, ici une structure en nid d'abeilles, tout en présentant un fort champ magnétique.

Cependant, remplir le volume de l'élément à pôle magnétique avec le maximum d'aimants unitaires en limitant les coûts de fabrication est complexe. En effet, par exemple, les aimants permanents présentent souvent au moins un côté non rectiligne en périphérie du corps du rotor de manière à augmenter le volume occupé par les aimants permanents. Agencer des aimants unitaires pour suivre ce côté non rectiligne génère alors des espaces vides ce qui diminue l'efficacité magnétique de l'élément à pôle magnétique et donc du rotor.

### PRESENTATION DE L'INVENTION

Afin de remédier aux inconvénients précités de l'état de la technique, la présente invention propose une géométrie et un agencement des aimants unitaires simplifiant la fabrication en série.

Plus particulièrement, on propose selon l'invention un procédé d'assemblage d'un élément à pôle magnétique pour un rotor pour machine électrique à flux axial, ledit rotor comprenant un corps en forme de disque centré sur un axe de rotation et s'étendant dans un plan principal, ledit corps présentant au moins un logement, ledit élément à pôle magnétique comprenant une pluralité d'aimants unitaires, ledit procédé comprenant les étapes suivantes :
e1) formation d'une première rangée d'au moins deux aimants unitaires et maintien des aimants unitaires de ladite première rangée par une bande de matériau adhésif ;
e2) disposition de ladite première rangée sur un support d'assemblage présentant une courbure égale ou sensiblement égale à la courbure d'un bord périphérique du logement autour de l'axe de rotation, de manière à ce que les aimants unitaires de ladite première rangée soient disposés selon une première ligne qui est comprise dans un plan d'assemblage et présente une courbure non nulle;
e3) formation d'une autre rangée d'au moins deux autres aimants unitaires et maintien des aimants unitaires de ladite autre rangée par une autre bande de matériau adhésif ;
e4) disposition de ladite autre rangée sur ladite première rangée, de manière à ce que les aimants unitaires de ladite autre rangée soient disposés selon une autre ligne qui est comprise dans ledit plan d'assemblage et présente une courbure non nulle ;
e5) réitération des étapes e3) et e4) jusqu'à l'assemblage de l'élément à pôle magnétique.

Ce procédé permet d'agencer les aimants unitaires pour qu'ils soient disposés selon des lignes présentant des courbures non nulles par rapport à l'axe de rotation. L'élément à pôle magnétique assemblé par ce procédé présente donc à la fois une bonne résistance aux contraintes mécaniques et des bonnes performances magnétiques. De plus, ce procédé permet une fabrication en série à moindre coûts.

De plus, disposer les aimants unitaires selon une ligne dont la courbe est non nulle permet de suivre un profil non rectiligne. Par exemple, la première ligne peut être située au niveau d'une partie périphérique du logement dont la courbure est sensiblement égale à la courbure externe du corps. Cela permet de diminuer la force maximum subie par un aimant unitaire pris indépendamment. En d'autres termes, les forces centrifuges et magnétiques sont mieux réparties sur tous les aimants unitaires, et le risque de détachement d'un aimant unitaire est moindre. La résistance du rotor à la force centrifuge est ainsi augmentée.

D'autres caractéristiques avantageuses et non limitatives du procédé conforme à l'invention, prises individuellement ou selon toutes les combinaisons techniquement possibles, sont les suivantes :
- ledit support d'assemblage est une pièce distincte dudit corps et à l'étape e5), ledit élément à pôle magnétique est inséré dans ledit logement ;
- à l'étape e5), ledit élément à pôle magnétique est inséré de telle sorte que ledit plan d'assemblage soit parallèle audit ou confondu avec ledit plan principal ;
- l'insertion dudit élément à pôle magnétique dans ledit logement est précédée d'une étape de rectification des bords latéraux dudit élément à pôle magnétique ;
- le support d'assemblage appartient audit logement et ledit plan d'assemblage est parallèle audit ou confondu avec ledit plan principal ;
- ledit procédé comprend l'étape suivante : e6) compression de l'élément à pôle magnétique dans le plan principal et vers la périphérie du logement ;
- ledit procédé comprend l'étape suivante : e7) fixation de l'élément à pôle magnétique dans le logement par injection d'un matériau de liaison enrobant lesdits aimants unitaires ;
- ledit procédé comprend une étape préalable de réalisation desdits aimants unitaires par sectionnement d'un bloc d'aimants en aimants unitaires en forme de parallélépipède rectangle sensiblement identiques, s'étendant, dans leur plus grande dimension, selon une direction principale et dans une autre dimension, selon une direction transverse orthogonale à la direction principale ;
- l'élément à pôle magnétique est disposé ou inséré dans ledit logement de telle sorte que les directions principales desdits aimants unitaires sont orientées selon l'axe de rotation et les directions transverses sont orientées tangentiellement à ladite première ligne ou auxdites autres lignes ;
- la largeur de la bande de matériau adhésif est plus petite que la longueur des aimants unitaires selon la direction principale.

Agencer des aimants en forme de parallélépipède rectangle comme décrit cidessus génère de petits espaces libres répartis de façon homogène dans l'élément à pôle magnétique. Ces espaces libres augmentent la pénétration, c'est-à-dire ici améliorent le remplissage, d'un matériau de liaison, par exemple une colle ou un verni, qui permet la cohésion des aimants unitaires.

L'invention concerne également un rotor tel que définit dans l'introduction dans lequel une partie au moins des aimants unitaires présentent une forme de parallélépipède rectangle et soient disposés côte-à-côte selon une première ligne et une deuxième ligne qui sont adjacentes, qui sont comprises dans le plan principal et qui présentent des courbures moyennes non nulles autour de l'axe de rotation, et en ce que les aimants unitaires disposés selon la première ligne soient séparés des aimants unitaires disposés selon la deuxième ligne par une bande de matériau adhésif.

Ainsi, grâce à l'invention, l'élément à pôle magnétique comprend des aimants unitaires en forme de parallélépipède rectangle. Ces aimants unitaires sont simples à fabriquer en série. En effet, il suffit par exemple de craquer ou couper un bloc selon seulement deux directions. De par leur forme de parallélépipède rectangle, les aimants unitaires sont facilement agençables les uns à côté des autres.

D'autres caractéristiques avantageuses et non limitatives du rotor conforme à l'invention, prises individuellement ou selon toutes les combinaisons techniquement possibles, sont les suivantes :
- lesdits aimants unitaires sont enrobés d'un matériau de liaison ;
- tous les aimants unitaires de la pluralité d'aimants unitaires présentent une forme de parallélépipède rectangle et sont répartis sur plusieurs lignes ;
- la courbure de la ligne la plus proche de la périphérie du corps est sensiblement égale à la courbure périphérique du logement ;
- la courbure de chaque ligne est un arc de cercle ;
- les aimants unitaires en forme de parallélépipède rectangle sont sensiblement identiques ; et
- les aimants unitaires s'étendent, dans leur plus grande dimension, selon une direction principale et dans une autre dimension, selon une direction transverse orthogonale à la direction principale, dans lequel les directions principales desdits aimants unitaires sont orientées selon l'axe de rotation et dans lequel les directions transverses sont orientées tangentiellement à la première ligne.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres. Notamment en variante on colle d'abord les aimants entre eux pour former un pôle d'aimants, puis on compresse le pôle d'aimants dans la structure du rotor, par exemple par frettage.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
La figure 1 est une vue schématique en coupe, selon un plan principal, d'un rotor assemblé selon l'invention comprenant des aimants permanents ;
La figure 2 est une vue schématique en perspective d'un aimant unitaire du rotor de la figure 1 ;
La figure 3 est une vue schématique en coupe d'aimants unitaires du rotor de la figure 1, disposés selon une ligne ;
La figure 4 est une vue schématique en coupe d'une partie périphérique d'une variante de réalisation d'un élément à pôle magnétique du rotor de la figure 1 ;
La figure 5 est un schéma bloc d'une séquence d'étapes d'un procédé d'assemblage conforme à l'invention, permettant l'assemblage d'un élément à pôle magnétique au sein d'un rotor ;
La figure 6 est une vue schématique en coupe d'un bloc d'aimant destiné la formation d'une variante des aimants unitaires de la figure 1 ;
La figure 7 schématiquement une étape du procédé de la figure 5 dans laquelle des aimants unitaires sont fabriqués à partir du bloc d'aimants de la figure 6 ;
La figure 8 illustre schématiquement une étape du procédé de la figure 5 dans laquelle une rangée d'aimant unitaire est formée ;
La figure 9 illustre schématiquement une étape du procédé de la figure 5 dans laquelle des aimants unitaires sont insérés dans un logement du rotor de la figure 1 ;
La figure 10 illustre schématiquement une autre étape du procédé de la figure 5 dans laquelle des aimants unitaires sont insérés dans un logement du rotor de la figure 1 ;
La figure 11 illustre schématiquement une étape du procédé de la figure 5 dans laquelle un matériau de liaison est injecté ;
La figure 12 est une vue schématique en coupe d'aimants unitaires avant compression ; et
La figure 13 illustre schématiquement une étape du procédé de la figure 5 dans laquelle les aimants unitaires sont compressés.

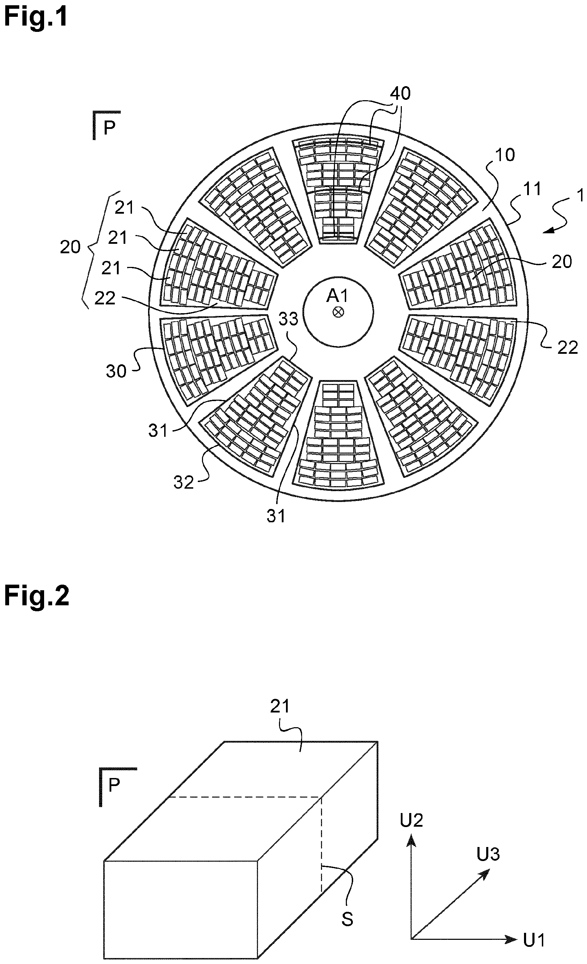

Sur la figure 1, on a représenté un rotor 1 pour machine électrique à flux axial comprenant un corps 10 et une pluralité de pôles magnétiques 20.

Le corps 10 a une forme globale de disque, en ce sens qu'il est sensiblement circonscrit à un cylindre de révolution autour d'un axe ci-après appelé axe de rotation A1. Le corps 10 s'étend dans un plan principal P orthogonal à l'axe de rotation. Le plan principal P est ici le plan de la figure 1. Le corps 10 présente une hauteur (dimension du corps selon l'axe de rotation A1) qui est très inférieure au diamètre. Cette hauteur est appelée épaisseur du corps 10. Le corps 10 possède ainsi deux faces circulaires planes, parallèles entre elles et au plan principal P, et perpendiculaires à l'axe de rotation A1 du rotor 1. Le plan principal P est ici situé à équidistance des deux faces circulaires.

Comme le montre la figure 1, le corps 10 présente un évidement central adapté à recevoir un arbre de transmission s'étendant le long de l'axe de rotation A1. Le rotor 1 est prévu pour être fixé à cet arbre de transmission qu'il est destiné à entraîner.

Le corps 10 peut par exemple être réalisé à base d'aluminium, d'acier, de fer, de titane ou en un alliage contenant ces métaux, tous amagnétiques. Il est par exemple réalisé par un empilage de tôles de métal d'une épaisseur inférieure ou égale au millimètre. Ces plaques de tôles sont ici courbes et empilées radialement. Elles s'étendent sur toute la hauteur du corps 10. Le corps 10 est cependant de préférence constitué de matière composite renforcée en fibres de verre ou de carbone.

Comme cela apparaît en figure 1, le corps 10 possède une pluralité de logements 30 en creux. Ici, le corps 10 possède dix logements 30 identiques. Les logements 30 sont répartis régulièrement sur toute la périphérie 11 du corps 10, c'est-à-dire réparties, à espacement angulaire constant, autour de l'axe de rotation A1. Ceci permet d'assurer un bon équilibre du rotor 1 lorsque celui-ci est en rotation.

Chaque logement 30 s'étend de préférence sur toute l'épaisseur du corps 10. Cela présente l'avantage de fournir deux surfaces de travail opposées. Un tel rotor 1 peut ainsi par exemple être encadré par deux stators pour fournir plus de puissance mécanique.

Comme le montre la figure 1, chaque logement 30 présente une forme globalement trapézoïdale, avec deux bords latéraux 31 d'extension sensiblement radiale, un bord périphérique 32 et un bord intérieur 33. Ici, les deux bords latéraux 31 sont rectilignes.

Le bord périphérique 32 est ici courbe. Dans le plan principal P, le bord périphérique 32 définit un arc de cercle dont le rayon de courbure est sensiblement égal au rayon de courbure de la périphérie 11 du corps 10.

Le bord intérieur 33 peut être rectiligne, comme illustré sur la figure 1, ou courbe, par exemple pour être adapté à l'évidement centrale du corps 10.

De manière générale, chaque élément à pôle magnétique 20 a une forme identique, en négatif, à celle du logement 30 dans lequel il est inséré. Comme le montrent les figures 1 et 2, chaque élément à pôle magnétique 20 est donc ici de forme globalement trapézoïdale. L'épaisseur de chaque élément à pôle magnétique 20 (dimension selon l'axe de rotation A1) est sensiblement égale à l'épaisseur du corps 10.

Comme le montre la figure 1, chaque élément à pôle magnétique 20 comprend une pluralité d'aimants unitaires 21. Les dimensions des aimants unitaires 21 sont largement inférieures aux dimensions de l'élément à pôle magnétique 20. Ainsi, ici, chaque élément à pôle magnétique 20 comprend plusieurs dizaines d'aimants unitaires 21. En variante, un élément à pôle magnétique peut comprendre une ou plusieurs centaines d'aimants unitaires.

Ici, une partie au moins des aimants unitaires 21 présentent une forme de parallélépipède rectangle et sont disposés côte-à-côte selon une première ligne 41 et une deuxième ligne 42 qui sont comprises dans le plan principal P et qui présentent une courbure moyenne non nulle autour de l'axe de rotation A1. Un aimant unitaire 21 est par exemple représenté en figure 2.

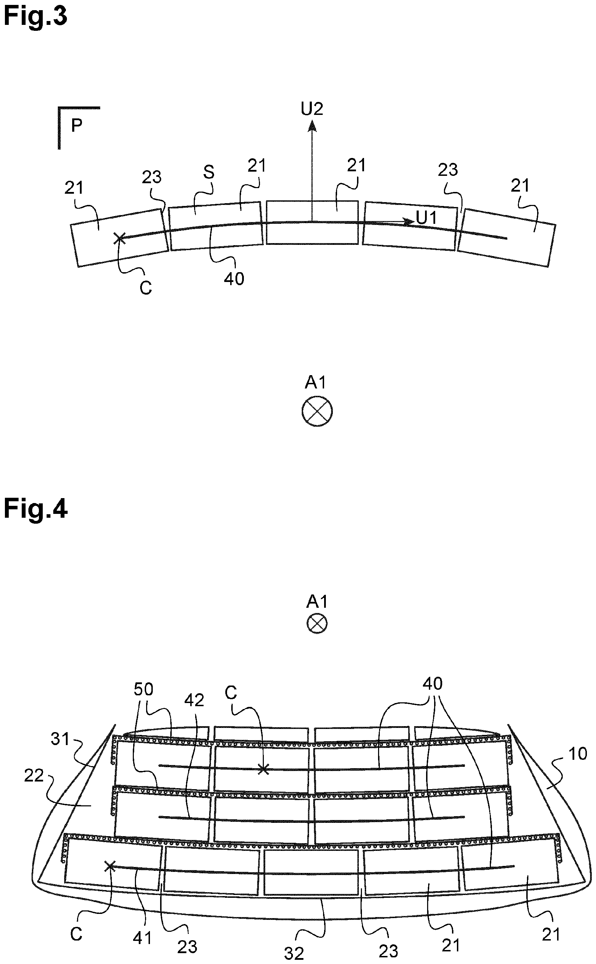

Comme le montrent la figure 4, les aimants unitaires 21 disposés selon deux lignes 40 adjacentes sont séparés par une bande de matériau adhésif 50. Ici, deux lignes sont adjacentes lorsqu'elles sont situées dans un voisinage immédiat, l'une au-dessus de l'autre. Par exemple, sur la figure 4, la première ligne 41 et la deuxième ligne 42 sont adjacentes. Ici, une ligne possède donc une autre ou deux lignes adjacentes. Cela signifie que les aimants unitaires 21 de deux rangées consécutives, par rapport à l'axe de rotation A1, sont séparés par une bande de matériau adhésif 50 rigide.

Le matériau adhésif est typiquement un ruban d'un maillage de fibres de verre ou de carbone recouvert de colle sur l'une de ses faces ou sur ses deux faces. La bande de matériau adhésif 50 est simplement appelée par la suite bande adhésive 50.

Comme illustré en figure 3, le fait qu'une ligne 40 présente une courbure moyenne non nulle signifie que la ligne 40 n'est pas rectiligne. Le fait que la courbure moyenne de la ligne 40 soit non nulle autour de l'axe de rotation A1 signifie ici que la ligne 40 présente une concavité orientée vers l'axe de rotation A1. De façon générale, cela signifie que la ligne 40 est courbée autour de l'axe de rotation A1.

Par « disposé selon une ligne », on entend qu'au moins une partie d'un aimant unitaire 21 se trouve sur la ligne 40. Ici, comme illustré en figure 3, la partie d'un aimant unitaire 21 se trouvant sur la ligne 40 est de préférence le centre C de la section S de l'aimant unitaire 21 dans le plan principal P.

L'élément à pôle magnétique 20 comprend aussi un matériau de liaison 22 qui assure la cohésion entre les aimants unitaires 21. Ici, le matériau de liaison 22 enrobe les aimants unitaires 21. Le matériau de liaison 22 est par exemple une résine en plastique composite, une colle ou un verni.

Ici, comme le montre la figure 1, tous les aimants unitaires 21 présentent une forme de parallélépipède rectangle. De plus, l'ensemble des aimants unitaires 21 est réparti sur plusieurs lignes 40. Toutes les lignes 40 sont ici comprises dans le plan principal P.

De plus, tous les aimants unitaires 21 sont sensiblement identiques. Cela facilite leur fabrication en série. Par sensiblement on entend qu'une tolérance de 5 à 10% est admise sur les différences de dimensions et de directions entre chaque aimant unitaire, les aimants unitaires étant par exemple fabriqués par sectionnement d'un gros bloc d'aimant, ce sectionnement étant obtenu par craquement ou sciage.

Les aimants unitaires 21 disposés côte-à-côte selon une ligne 40 forment une rangée d'aimants unitaires 21. Ainsi, par exemple, les pôles magnétiques 20 de la figure 1 comprennent treize rangées d'aimants unitaires 21 disposés selon treize lignes 40, dont seulement une partie est référencée sur la figure 1.

Comme le montrent les figures 3 et 4, cette disposition des aimants unitaires forme des espaces libres 23 entre les aimants unitaires 21. Les espaces libres 23 sont globalement en forme de prisme triangulaire profilés parallèlement à l'axe de rotation A1. Les espaces libres 23 permettent une meilleure pénétration du matériau de liaison 22 entre les aimants unitaires 21. La forme de prisme triangulaire confère notamment une cohésion particulière aux aimants unitaires 21 contre les forces centrifuges lorsque le rotor 1 est en rotation grâce à cette meilleure pénétration du matériau de liaison 22.

Comme illustré en figure 2, un aimant unitaire 21 en forme de parallélépipède rectangle présente six faces égales deux à deux et tous les angles entre les faces sont des angles droits. Un aimant unitaire 21 définit trois directions U1, U2, U3 orthogonales les unes aux autres. Chaque direction U1 ; U2 ; U3 est perpendiculaire à une paire de côtés opposés.

Comme le montre la figure 2, les aimants permanents 21 s'étendent selon une direction principale U3 définie par leur plus grande dimension. Par exemple, ici, les aimants unitaires 21 s'étendent selon la direction U3. Les deux autres directions U1, U2 sont ici appelées directions transverses U1, U2. Par exemple, ici, la dimension des aimants unitaires 21 selon la direction principale U3 est environ deux fois supérieure à la dimension selon une direction transverse U1 et environ quatre fois supérieure à la dimension selon l'autre direction transverse U2. Ici, les trois directions U1, U2, U3 définissent un repère orthogonal.

Ici, les directions principales U3 des aimants unitaires 21 sont orientées selon l'axe de rotation A1. Cela signifie que les directions transverses U1, U2 sont parallèles au plan principal P. Les directions transverses U1, U2 sont mêmes ici plus précisément comprises dans le plan principal P. Ici, la dimension principale U3 d'un aimant unitaire 21 est sensiblement égale à l'épaisseur du corps 10. Selon cette orientation, un aimant unitaire 21 s'étend donc d'une face circulaire à l'autre du corps 10.

Cette orientation des aimants unitaires 21 assure une rigidité élevée de l'élément à pôle magnétique 20 selon l'axe de rotation A1, une fois que les aimants unitaires 21 sont pris dans le matériau de liaison 22. En effet, selon cette orientation, chaque aimant unitaire 21 est fixé par une grande partie de sa surface, et de plus selon une surface parallèle aux contraintes s'exerçant selon l'axe de rotation. Grâce à cette orientation, il n'est pas nécessaire d'enserrer le rotor 1 entre des disques de maintien ce qui permet de réduire la taille des entrefers et d'améliorer les performances de la machine électrique.

De plus, une des deux directions transverses U1, U2 est ici tangente à la ligne 40 selon laquelle les aimants unitaires 21 sont disposés. Cela signifie ici, comme illustré en figure 3, qu'une des deux directions transverses U2 est orthogonale à la ligne 40 au niveau du centre C de la section S de l'aimant unitaire 21. L'autre direction transverse U1 est alors tangente à la ligne 40 au niveau du centre C de la section S de l'aimant unitaire 21.

La courbure de la ligne la plus périphérique est ici sensiblement égale à la courbure du bord périphérique 32 du logement 30. La courbure des lignes 40 peut augmenter ou diminuer en se rapprochant de l'axe de rotation A1. La courbure de la ligne la plus proche du bord intérieur 33 du logement 30 peut par exemple être sensiblement égale à la courbure de ce dernier. Cette courbure peut par exemple correspondre à la courbure de l'évidement central. La courbure des lignes peut aussi rester constante.

Les aimant unitaires 21 disposés selon la ligne la plus périphérique sont situés contre le bord périphérique 32 du logement 30, au matériau de liaison 22 près. Cette rangée d'aimants unitaires 21 épouse donc la forme non rectiligne du bord périphérique 32, ce qui limite globalement la perte d'espace.

Ici, la courbure de chaque ligne 40 est plus spécifiquement un arc de cercle.

Comme le montre la figure 4, on peut prévoir que la bande adhésive 50 soit plus longue qu'une rangée d'aimants unitaires 21. Les aimants unitaires 21 situés aux extrémités des rangées sont alors séparés, au moins en partie, des bords latéraux 31 par la bande adhésive 50.

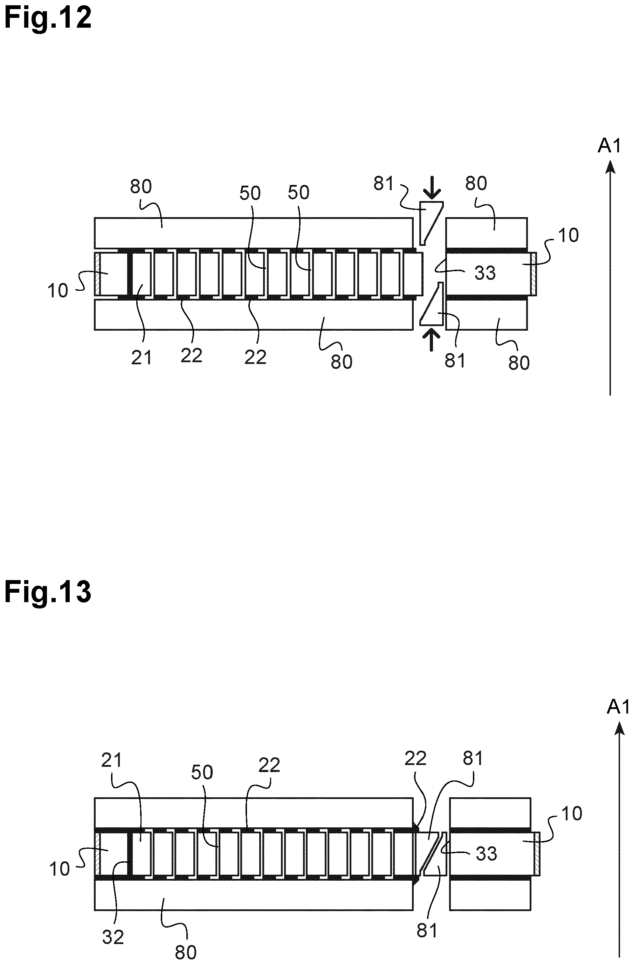

Le matériau adhésif 50 comprend par exemple une structure en fibres de verre formant une bande dont les deux faces sont imprégnées d'une colle. De façon plus générale, le matériau adhésif 50 est ici une bande adhésive double face. La largeur de la bande adhésive 50 selon la direction principale U3 est de préférence plus petite que la longueur des aimants unitaires 21 selon la direction principale U3. Elle est par exemple inférieure d'au moins 20% à la longueur des aimants unitaires. Cela permet au matériau de liaison 22 d'enrober suffisamment les aimants unitaires 21, en particulier lorsque le matériau de liaison 22 pénètre mal autour ou à travers la bande adhésive 50. Le rotor 1 est alors plus résistant lors de sa rotation Néanmoins, comme le montre les figures 12 et 13, il est aussi possible d'utiliser une bande adhésive plus large que la longueur des aimants unitaires selon la direction U3. Dans ce cas, la bande adhésive est recourbée sur les surfaces des aimants unitaires 21 au niveau des faces circulaires du corps 10.

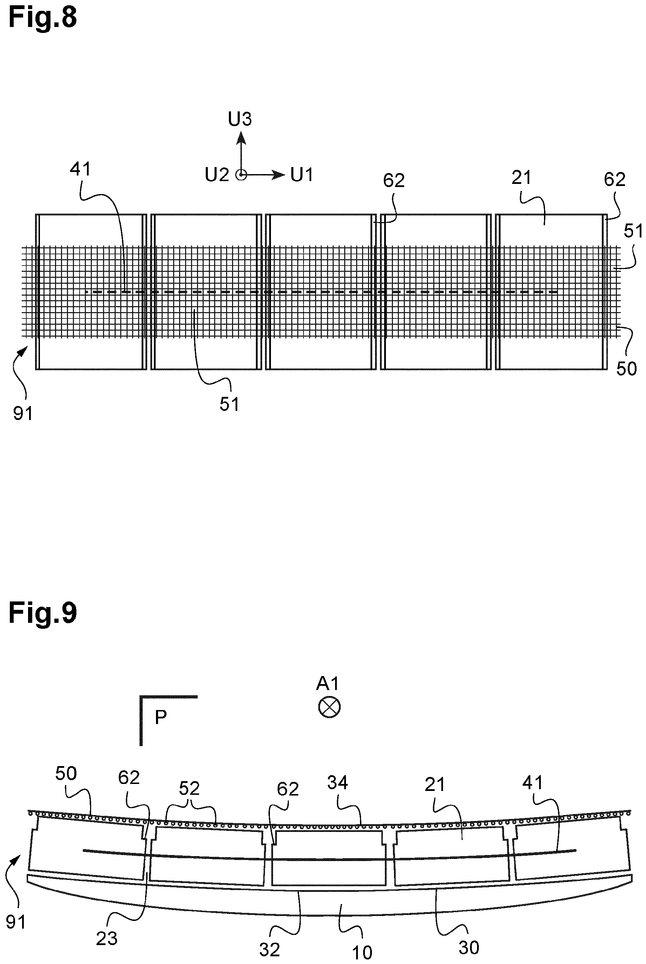

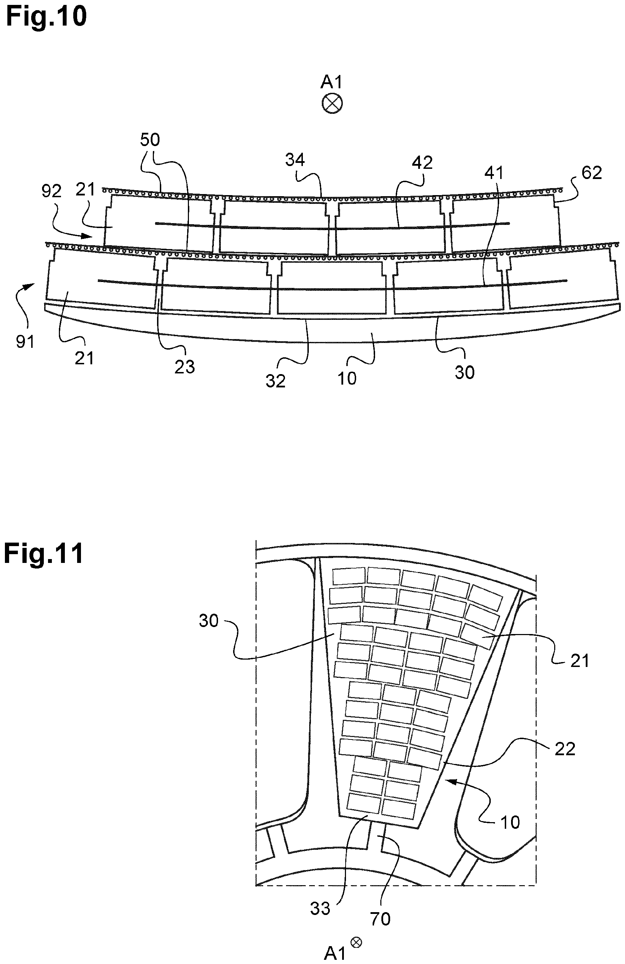

Comme le montre la figure 8, la structure du matériau adhésif 50 forme ici un maillage définissant des pores 51. Comme le montrent les figures 9 et 10, le matériau adhésif 50 comprend ici des reliefs 52 sur une de ses deux faces. Les pores 51 et les reliefs 52 permettent une meilleure pénétration du matériau de liaison 22 entre les aimants unitaires 21. Pour assurer une bonne pénétration du matériau de liaison 22, l'épaisseur des reliefs 52 et donc du matériau adhésif 50 est comprise entre 1% à 15% de la dimension d'un aimant unitaire 21 selon la direction transverse U2.

De préférence, lorsque la bande adhésive 50 est recourbée sur les surfaces des aimants unitaires 21 au niveau des faces circulaires du corps 10, le maillage de la bande adhésive 50 permet au matériau de liaison 22 de pénétrer sur au moins une maille d'épaisseur lorsque l'épaisseur de la bande adhésive 50 est de deux mailles ou plus.

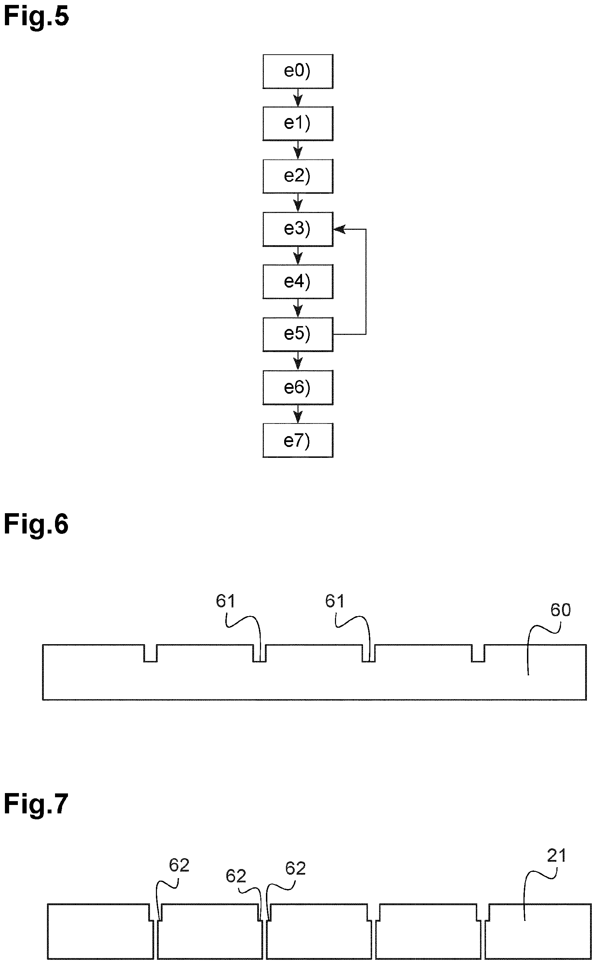

On décrit maintenant, à l'aide des figures 5 à 13, un procédé d'assemblage d'un tel élément à pôle magnétique 20.

La figure 5 illustre un procédé d'assemblage d'un élément à pôle magnétique 20 au sein du rotor 1. Ce procédé comprend les étapes suivantes : e1) formation d'une première rangée 91 d'au moins deux aimants unitaires 21 et maintien des aimants unitaires 21 de la première rangée 91 par une bande de matériau adhésif 50 ;
e2) disposition de la première rangée 91 sur un support d'assemblage présentant une courbure égale ou sensiblement égale à la courbure d'un bord périphérique 32 du logement 30 autour de l'axe de rotation A1 de manière à ce que les aimants unitaires de ladite première rangée 91 soient disposés selon une première ligne 41 comprise dans un plan d'assemblage et présentant une courbure non nulle ;
e3) formation d'une autre rangée 92 d'au moins deux autres aimants unitaires 21 et maintien des aimants unitaires 21 de l'autre rangée 92 par une autre bande de matériau adhésif 50 ;
e4) disposition de l'autre rangée 92 sur la première rangée 91, de manière à ce que les aimants unitaires de l'autre rangée 92 soient disposés selon une autre ligne 42 comprise dans le plan d'assemblage et présentant une courbure non nulle;
e5) réitération des étapes e3) et e4) jusqu'à l'assemblage de l'élément à pôle magnétique 20.

On entend ici par « disposer sur » qu'une rangée est disposée au contact de ou contre le support d'assemblage ou une autre rangée. Ici, par exemple, l'autre rangée 92 est disposée au contact de la bande adhésive 50 de la première rangée 91.

Ici, à l'étape e5), lors des réitérations des étapes e3) et e4), chaque nouvelle rangée est disposée sur la rangée précédente, la rangée précédente étant la rangée disposée à la précédente étape e4). Ainsi, par exemple, une troisième rangée est disposée sur une seconde rangée et n'est donc pas au contact de la première rangé. Les autres rangées sont ainsi empilées sur la première rangée puis les unes sur les autres. Avantageusement, la bande adhésive permet alors le maintien des différentes rangées les unes par rapport aux autres.

Dans un mode de réalisation (non représenté sur les figures), le support d'assemblage est une pièce distincte du corps 10. L'assemblage de l'élément à pôle magnétique 20 est alors réalisé hors du logement 30. A l'étape e5), l'élément à pôle magnétique 20 est alors inséré dans le logement 30.

Le support d'assemblage est alors conçu pour que la courbure de la surface sur laquelle est disposée la première rangée 91 soit égale ou sensiblement égale à la courbure du bord périphérique 32 du logement 30. Par sensiblement égale, on entend égale avec une tolérance de 0 à 5%, c'est-à-dire, ici, égale à 5% près maximum à la courbure du bord périphérique 32 du logement 30. La surface du support d'assemblage sur laquelle est disposée la première rangée 91 présente donc une forme similaire au bord périphérique du logement 30.

Dans ce cas, le plan d'assemblage est orthogonal à la surface du support d'assemblage sur laquelle est disposée la première rangée 91. Les lignes selon lesquelles sont disposées les rangées sont toutes comprises dans le plan d'assemblage.

Ici, à l'étape e5), l'élément à pôle magnétique 20 est inséré de telle sorte que le plan d'assemblage soit parallèle au plan principale P ou confondu avec ce dernier.

L'étape d'insertion dans le logement est éventuellement précédée d'une étape de rectification des bords des rangées d'aimants pour que l'élément à pôle magnétique présente des bords latéraux correspondant aux bords latéraux du logement. Cela permet de réaliser des éléments à pole magnétique remplissant uniformément et de façon optimale le logement. L'étape de rectification utilise par exemple une scie à eau ou une scie circulaire. Ici, l'étape de rectification est donc une étape d'usinage.

Les figurent 6 à 13 illustrent un mode de réalisation dans lequel le support appartient au logement 30 de telle sorte que l'assemblage de l'élément à pôle magnétique 20 soit réalisé au sein du logement 30. Le plan d'assemblage est alors est parallèle au plan principale P ou confondu avec ce dernier.

Ici, le support d'assemblage est plus précisément le bord périphérique 32.

Le procédé d'assemblage illustré sur les figure 6 à 13 comprend alors les étapes suivantes :
e1) formation d'une première rangée 91 d'au moins deux aimants unitaires 21 en forme de parallélépipède rectangle et maintien des aimants unitaires 21 de cette rangée par une bande adhésive 50 ;
e2) insertion de la première rangée 91 dans le logement 30 au niveau de la périphérie du logement 30, de manière à ce que les aimants unitaires 21 de la première rangée 91 soient disposés selon une première ligne 41 comprise dans le plan principal P et présentant une courbure non nulle autour de l'axe de rotation A1 ;
e3) formation d'une autre rangée 92 d'au moins deux autres aimants unitaires 21 en forme de parallélépipède rectangle et maintien des aimants de l'autre rangée 92 par une autre bande adhésive 50 ;
e4) insertion de l'autre rangée 92 dans le logement 30 au niveau d'une partie libre 34, de manière à ce que les aimants unitaires 21 de l'autre rangée 92 soient disposés selon une autre ligne 42 comprise dans le plan principal P et présentant une courbure non nulle autour de l'axe de rotation A1 ;
e5) réitération des étapes e3) et e4) jusqu'à l'assemblage de l'élément à pôle magnétique 20.

Ici, les aimants unitaires 21 sont préalablement obtenus lors d'une étape e0) par le sectionnement ou le craquement d'un bloc d'aimant 60. Comme le montre la figure 6, le bloc d'aimant présentant des rainures 61 facilitant son craquement ou sectionnement en aimants unitaires 21. Une fois les aimants unitaires 21 disposés en rangées comme sur la figure 9, ces rainures augmentent la taille des espaces libres 23, ce qui favorise par la suite la pénétration du matériau de liaison.

Comme le montre la figure 7, trois aimants unitaires 21 obtenus par ce procédé présentent alors sensiblement une forme de parallélépipède rectangle avec deux rainures latérales 62 s'étendant dans la direction principale U3. Dans les directions transverses U1, U2, les dimensions des rainures latérales sont ici inférieures à 10% de la longueur des côtés des aimants unitaires 21. Les aimants unitaires 21 sont donc décrit par la suite comme présentant une forme de parallélépipède rectangle.

L'étape e1) est illustrée à la figure 8. Sur la figure 8, une première rangée 91 de cinq aimants unitaires 21 identiques sont disposés les uns à côté des autres. La rangée d'aimant unitaires 21 est ici rectiligne.

Comme le montre la figure 8, il est de plus prévu que les aimants unitaires 21 soient reliés ensemble par une bande adhésive 50 telle que décrite précédemment. La bande adhésive 50 permet de manipuler facilement la rangée d'aimants unitaires 21, notamment lors de l'étape e2). Lors de l'étape e1) on positionne par exemple la bande adhésive sur des aimants unitaires 21 alignés sur un support plan.

Comme le montre la figure 9, les aimants unitaires 21 de la première rangée 91 sont insérés dans le logement 30 au niveau de la périphérie du logement 30, c'est-à-dire ici contre le bord périphérique 32 du logement 30.

Le nombre d'aimants unitaires 21 disposés les uns à côté des autres à l'étape e1) est déterminé par la longueur du bord périphérique 32. Ce nombre est de préférence déterminé de manière à disposer le plus d'aimants unitaires 21 le long du bord périphérique 32.

Les aimants unitaires 21 sont insérés de manière à ce que la première ligne 41 soit comprise dans le plan principal P. Cela est par exemple le cas ici lorsque les aimants unitaires 21, dont la plus grande dimension est sensiblement égale à l'épaisseur du corps 10, s'étendent d'une face circulaire à l'autre. En d'autres termes, la rangée d'aimants unitaires 21 est centrée, selon l'axe de rotation A1, dans le logement 30.

Puisque la première rangée 91 d'aimants unitaires 21 est agencée contre le bord périphérique 32, la première ligne 41 présente naturellement une courbure non nulle autour de l'axe de rotation A1. Ici, la courbure de la première ligne 41 est sensiblement égale à la courbure du bord périphérique 32. La courbure de la première ligne 41 décrit plus spécifiquement un arc de cercle.

Grâce à la bande adhésive 50, et donc au fait de manipuler les aimants unitaires par rangées, il n'est pas nécessaire d'utiliser d'outil spécifique ou ni de positionner les aimants unitaires 21 un à un dans le logement 30. Cela facilite leur positionnement et représente un gain de temps.

A l'étape e3), au moins deux autres aimants unitaires 21 en forme de parallélépipède rectangle sont disposés pour former une deuxième rangée 92. Les autres aimants unitaires 21 sont ici identiques aux aimants unitaires 21 de la première rangée 91.

Comme pour la première rangée 91, il est de plus prévu que les autres aimants unitaires 21 soient reliés ensemble par une bande adhésive 50.

On décrit ici la première itération de l'étape e3) durant laquelle les aimants unitaires 21 de la deuxième rangée 92 sont disposés selon une deuxième ligne 42.

A l'étape e4), les autres aimants unitaires 21 sont insérés dans le logement 30 au niveau d'une partie libre 34. Comme le montre la figure 9, pour la deuxième rangée 92, la partie libre 34 est ici définie par la première rangée 91. La partie libre 34 est ici définie par les surfaces des aimants unitaires 21 de la première rangée 91 situées à l'opposé du bord périphérique 32. La partie libre 34 est ici en partie recouverte par la bande adhésive 50. Ainsi on superpose deux rangées d'aimants unitaires facilement sans outil spécifique. Ici, les rangées sont disposées de manière à ce que l'élément à pôle magnétique formé présente un plan de symétrie comprenant l'axe de rotation A1.

Comme le montre la figure 10, lors des itérations successives des étapes e3) et e4), la partie libre 34 est définie par les surfaces des aimants unitaires 21 de la rangée précédente situées à l'opposé du bord périphérique 32.

A l'étape e4), les autres aimants unitaires 21 sont insérés de manière à ce que l'autre ligne, par exemple ici la deuxième ligne 42, soit comprise dans le plan principal P et présente une courbure non nulle autour de l'axe de rotation A1. La courbure d'une ligne est ici non nulle puisque les aimants unitaires 21 sont agencés contre la rangée précédente.

Ici, la bande adhésive 50 permet de fixer la deuxième rangée 92 à la première rangée 91 lorsque la deuxième rangée est insérée dans le logement 30. De façon générale, la bande adhésive permet de fixer la rangée qui est insérée à la rangée précédente.

Le nombre d'aimants unitaires 21 disposés selon la deuxième ligne 42 est ici inférieur ou égal au nombre d'aimants unitaires 21 disposés selon la première ligne 41. Par exemple sur la figure 10, la deuxième rangée 92 comprend quatre aimants unitaires 21. De façon générale, le nombre d'aimants unitaires d'une ligne est inférieure ou égale au nombre d'aimants unitaire de la rangée précédente. En variante, le nombre d'aimants unitaires peut être supérieur à celui de la rangée précédente.

Pour la deuxième rangée 92 et les rangées ultérieures, le nombre d'aimants unitaires 21 disposés les uns à côté des autres à l'étape e3) est déterminé par la longueur de la partie libre 34. Ce nombre est de préférence déterminé pour disposer le plus d'aimants unitaires 21 le long de la partie libre 34.

Les étapes e3) et e4) sont ensuite réitérées jusqu'à remplir le logement 30 avec le plus d'aimants unitaires 21.

Quel que soit le mode de réalisation, le procédé comprend ici une étape e6) de compression de l'élément à pôle magnétique 20, c'est-à-dire de l'ensemble des aimants unitaires 21 insérés dans le logement 30, dans le plan principal P et vers la périphérie du logement 30, c'est-à-dire vers le bord périphérique 32.

L'étape e6) peut par exemple faire gagner assez d'espace pour insérer une rangée supplémentaire contre le bord intérieur 33 du logement 30.

Le procédé comprend aussi une étape e7) de fixation de l'élément à pôle magnétique 20 dans le logement 30 par l'un des procédés suivants : collage, vernissage ou durcissement thermique d'un matériau de remplissage. Lors de cette étape e7), le matériau de liaison 22, qui est donc par exemple une colle, un vernis ou un matériau nécessitant une cuisson, est injecté autour des aimants unitaires 21. Comme le montre la figure 11, lors de l'étape e7), le matériau de liaison 22 est ici injecté dans le logement 30 à l'aide d'un injecteur 70 situé au niveau de l'évidement central du corps 10. Le matériau de liaison 22 est ainsi injecté par le bord intérieur 33 du logement 30. Ce procédé d'injection permet garantir la chaîne de côtes. Comme décrit précédemment, la pénétration du matériau de liaison 22 entre les aimants unitaires 21 est facilitée par l'espace libre 23 entre les aimants unitaires 21 et ici aussi par la structure de la bande adhésive 50.

Ici, l'étape e6) est réalisée pendant l'étape e7). L'étape e6) de compression de l'élément à pôle magnétique 20 est plus spécifiquement réalisé pendant le durcissement du matériau de liaison 22. Ces étapes sont illustrées aux figures 12 et 13 représentants le rotor 1 selon un plan de coupe comprenant l'axe de rotation du rotor A1.

Comme représenté en figure 12, des flasques composites 80 disposée de part et d'autre du corps 10 enserrent les aimants unitaires 21 dans une direction longitudinale parallèle à l'axe de rotation A1. Le matériau de liaison 22 est alors injecté entre et autour des aimants unitaires 21. Comme le montre la figure 13, deux éléments de presse 81 sont ensuite insérés en force, selon la direction longitudinale, de part et d'autre du rotor 1 entre l'élément à pôles magnétique 20 et le corps 10. Ici, les éléments de presse sont insérés entre les aimants unitaires et le bord intérieur 33 du logement 30. Les aimants unitaires 21 sont ainsi compressés vers le bord périphérique 32 du logement 30. Le matériau de liaison 22 durcie alors pendant les aimants unitaires 21 sont compressés.

En variante, on peut prévoir que d'enrober les aimants unitaires avec le matériau de liaison pour former l'élément à pôles magnétique puis de les placer dans le logement et de les compresser, par exemple par frettage.

La présente invention n'est nullement limitée aux modes de réalisation décrits et représentés, mais l'homme du métier saura y apporter toute variante conforme à l'invention.

## Revendications

1. Procédé d'assemblage d'un élément à pôle magnétique (20) pour un rotor (1) pour machine électrique à flux axial, ledit rotor (1) comprenant un corps (10) en forme de disque centré sur un axe de rotation (A1) et s'étendant dans un plan principal (P), ledit corps (10) présentant au moins un logement (30), ledit élément à pôle magnétique (20) comprenant une pluralité d'aimants unitaires (21), ledit procédé comprenant les étapes suivantes :
e1) formation d'une première rangée (91) d'au moins deux aimants unitaires (21) et maintien des aimants unitaires (21) de ladite première rangée (91) par une bande de matériau adhésif (50) ;
e2) disposition de ladite première rangée (91) sur un support d'assemblage présentant une courbure égale ou sensiblement égale à la courbure d'un bord périphérique (32) du logement (30) autour de l'axe de rotation (A1), de manière à ce que les aimants unitaires (21) de ladite première rangée (91) soient disposés selon une première ligne (41) qui est comprise dans un plan d'assemblage et présente une courbure non nulle ;
e3) formation d'une autre rangée (92) d'au moins deux autres aimants unitaires (21) et maintien des aimants unitaires (21) de ladite autre rangée (92) par une autre bande de matériau adhésif (50) ;
e4) disposition de ladite autre rangée (92) sur ladite première rangée (91), de manière à ce que les aimants unitaires (21) de ladite autre rangée (92) soient disposés selon une autre ligne (42) qui est comprise dans ledit plan d'assemblage et présente une courbure non nulle ;
e5) réitération des étapes e3) et e4) jusqu'à l'assemblage de l'élément à pôle magnétique (20).

2. Procédé selon la revendication 1, dans lequel ledit support d'assemblage est une pièce distincte dudit corps (10) et à l'étape e5), ledit élément à pôle magnétique (20) est inséré dans ledit logement (30).

3. Procédé selon la revendication 2, dans lequel, à l'étape e5), ledit élément à pôle magnétique (20) est inséré de telle sorte que ledit plan d'assemblage soit parallèle audit ou confondu avec ledit plan principal (P).

4. Procédé selon l'une des revendications 2 à 3, dans lequel l'insertion dudit élément à pôle magnétique (20) dans ledit logement (30) est précédée d'une étape de rectification des bords latéraux dudit élément à pôle magnétique (20).

5. Procédé selon la revendication 1, dans lequel le support d'assemblage appartient audit logement (30) et ledit plan d'assemblage est parallèle audit ou confondu avec ledit plan principal (P).

6. Procédé selon l'un des revendications 1 à 5, comprenant l'étape suivante :
e6) compression de l'élément à pôle magnétique (20) dans le plan principal (P) et vers la périphérie du logement (32).

7. Procédé selon l'une des revendications 1 à 6, comprenant l'étape suivante :
e7) fixation de l'élément à pôle magnétique (20) dans le logement (30) par injection d'un matériau de liaison (22) enrobant lesdits aimants unitaires (21).

8. Procédé selon l'une des revendications 1 à 7, comprenant une étape préalable de réalisation desdits aimants unitaires (21) par sectionnement d'un bloc d'aimants (60) en aimants unitaires (21) en forme de parallélépipède rectangle sensiblement identiques, s'étendant, dans leur plus grande dimension, selon une direction principale (U3) et dans une autre dimension, selon une direction transverse (U1) orthogonale à la direction principale (U3).

9. Procédé selon la revendication 8, dans lequel l'élément à pôle magnétique (20) est disposé ou inséré dans ledit logement (30) de telle sorte que les directions principales (U3) desdits aimants unitaires (21) sont orientées selon l'axe de rotation (A1) et les directions transverses (U1) sont orientées tangentiellement à ladite première ligne (41) ou auxdites autres lignes (42).

10. Procédé selon l'une des revendications 8 et 9, dans lequel la largeur de la bande de matériau adhésif (50) est plus petite que la longueur des aimants unitaires (21) selon la direction principale (U3).

## Patentansprüche

1. Verfahren zur Montage eines Magnetpolelements (20) für einen Rotor (1) für eine elektrische Maschine mit Axialströmung, wobei der Rotor (1) einen scheibenförmigen Körper (10) umfasst, der auf einer Rotationsachse (A1) zentriert ist und sich in einer Hauptebene (P) erstreckt, wobei der Körper (10) mindestens eine Aufnahme (30) aufweist, wobei das Magnetpolelement (20) eine Vielzahl von Einzelmagneten (21) umfasst, wobei das Verfahren die folgenden Schritte umfasst:
e1) Bilden einer ersten Reihe (91) von mindestens zwei Einzelmagneten (21), und Halten der Einzelmagnete (21) der ersten Reihe (91) durch einen Klebstoffstreifen (50);
e2) Anordnen der ersten Reihe (91) auf einer Montageunterlage, die eine Krümmung aufweist, die gleich oder im Wesentlichen gleich der Krümmung einer Umfangskante (32) der Aufnahme (30) um die Rotationsachse (A1) ist, so dass die Einzelmagnete (21) der ersten Reihe (91) entlang einer ersten Linie (41) angeordnet sind, die in einer Montageebene umfasst ist, und eine Krümmung ungleich null aufweist;
e3) Bilden einer weiteren Reihe (92) von mindestens zwei weiteren Einzelmagneten (21), und Halten der Einzelmagnete (21) der weiteren Reihe (92) durch einen weiteren Klebstoffstreifen (50);
e4) Anordnen der weiteren Reihe (92) auf der ersten Reihe (91), so dass die Einzelmagnete (21) der weiteren Reihe (92) entlang einer weiteren Linie (42) angeordnet sind, die in der Montageebene umfasst ist und eine Krümmung ungleich null aufweist;
e5) Wiederholen der Schritte e3) und e4) bis zur Montage des Magnetpolelements (20).

2. Verfahren nach Anspruch 1, wobei die Montageunterlage ein vom Körper (10) getrenntes Teil ist, und in Schritt e5) das Magnetpolelement (20) in die Aufnahme (30) eingesetzt wird.

3. Verfahren nach Anspruch 2, wobei in Schritt e5) das Magnetpolelement (20) derart eingesetzt wird, dass die Montageebene parallel zur Hauptebene (P) ist oder mit dieser zusammenfällt.

4. Verfahren nach einem der Ansprüche 2 bis 3, wobei dem Einsetzen des Magnetpolelements (20) in die Aufnahme (30) ein Schritt des Schleifens der Seitenkanten des Magnetpolelements (20) vorausgeht.

5. Verfahren nach Anspruch 1, wobei die Montageunterlage zur Aufnahme (30) gehört und die Montageebene parallel zur Hauptebene (P) ist oder mit dieser zusammenfällt.

6. Verfahren nach einem der Ansprüche 1 bis 5, den folgenden Schritt umfassend:
e6) Komprimieren des Magnetpolelements (20) in der Hauptebene (P) und in Richtung des Umfangs der Aufnahme (32).

7. Verfahren nach einem der Ansprüche 1 bis 6, den folgenden Schritt umfassend:
e7) Befestigen des Magnetpolelements (20) in der Aufnahme (30) durch Einspritzen eines Verbindungsmaterials (22), das die Einzelmagnete (21) umhüllt.

8. Verfahren nach einem der Ansprüche 1 bis 7, einen vorgängigen Schritt zur Herstellung der Einzelmagnete (21) durch Unterteilen eines Blocks von Magneten (60) in im Wesentlichen identische rechteckige parallelepipedförmige Einzelmagnete (21) umfassend, die sich, in ihrer größten Abmessung, entlang einer Hauptrichtung (U3), und entlang einer weiteren Abmessung, in einer Querrichtung (U1) erstrecken, die orthogonal zur Hauptrichtung (U3) ist.

9. Verfahren nach Anspruch 8, wobei das Magnetpolelement (20) so in der Aufnahme (30) angeordnet oder eingesetzt ist, dass die Hauptrichtungen (U3) der Einzelmagnete (21) entlang der Rotationsachse (A1) ausgerichtet sind und die Querrichtungen (U1) tangential entlang der ersten Linie (41) oder den weiteren Linien (42) ausgerichtet sind.

10. Verfahren nach einem der Ansprüche 8 und 9, wobei die Breite des Klebstoffstreifens (50) kleiner ist als die Länge der Einzelmagnete (21) entlang der Hauptrichtung (U3).

## Claims

1. A method for assembling an element with a magnetic pole (20) for a rotor (1) for an axial flux electric machine, said rotor (1) comprising a disc shaped body (10) centred on an axis of rotation (A1) and extending in a main plane (P), said body (10) having at least one housing (30), said magnetic pole element (20) comprising a plurality of unit magnets (21), said method comprising the following steps:
e1) forming a first row (91) of at least two unit magnets (21) and holding the unit magnets (21) of said first row (91) by a strip of adhesive material (50);
e2) disposing said first row (91) on an assembly support having a curvature equal or substantially equal to the curvature of a peripheral edge (32) of the housing (30) around the axis of rotation (A1), so that the unit magnets (21) of said first row (91) are disposed along a first line (41) which is comprised in an assembly plane and has a non-zero curvature;
e3) forming another row (92) of at least two other unit magnets (21) and maintaining the unit magnets (21) of said other row (92) by another strip of adhesive material (50);
e4) disposing said other row (92) on said first row (91), so that the unit magnets (21) of said other row (92) are disposed along another line (42) which is comprised in said assembly plane and has a non-zero curvature;
e5) repeating steps e3) and e4) until assembling the magnetic pole element (20).

2. The method according to claim 1, wherein said assembly support is a part separate from said body (10) and in step e5), said magnetic pole element (20) is inserted into said housing (30).

3. The method according to claim 2, wherein, in step e5), said magnetic pole element (20) is inserted such that said assembly plane is parallel to said or coincident with said main plane (P).

4. The method according to one of claims 2 to 3, wherein the insertion of said magnetic pole element (20) into said housing (30) is preceded by a step of grinding the lateral edges of said magnetic pole element (20).

5. The method according to claim 1, wherein the assembly support belongs to said housing (30) and said assembly plane is parallel to said or coincident with said main plane (P).

6. The method according to one of claims 1 to 5, comprising the following step:
e6) compressing the magnetic pole element (20) in the main plane (P) and towards the periphery of the housing (32).

7. The method according to one of claims 1 to 6, comprising the following step:
e7) fixing the magnetic pole element (20) in the housing (30) by injection of a bonding material (22) coating said unit magnets (21).

8. The method according to one of claims 1 to 7, comprising a preliminary step of producing said unit magnets (21) by sectioning a block of magnets (60) into unit magnets (21) in the shape of a substantially identical rectangular parallelepiped, extending, in their largest dimension, in a main direction (U3) and in another dimension, in a transverse direction (U1) orthogonal to the main direction (U3).

9. The method according to claim 8, wherein the magnetic pole element (20) is disposed or inserted into said housing (30) such that the main directions (U3) of said unit magnets (21) are oriented according to the axis of rotation (A1) and the transverse directions (U1) are oriented tangentially to said first line (41) or to said other lines (42).

10. The method according to one of claims 8 and 9, wherein the width of the strip of adhesive material (50) is smaller than the length of the unit magnets (21) in the main direction (U3).
